Europäisches Patentamt

European Patent Office

Office européen des brevets

(11) Publication number: **0 192 542**
**A2**

# EUROPEAN PATENT APPLICATION

(21) Application number: 86400237.3

(22) Date of filing: 05.02.86

(51) Int. Cl.⁴: **A21D 13/08 , A21D 2/18**

(30) Priority: 15.02.85 US 702035
22.11.85 US 800745

(43) Date of publication of application:
27.08.86 Bulletin 86/35

(84) Designated Contracting States:
AT BE CH DE FR GB IT LI LU NL SE

(71) Applicant: NABISCO BRANDS INC.
Nabisco Brands Plaza
Parsippany New Jersey 07054(US)

(72) Inventor: Finley, John W.
3 Old Stony Lane
Whippany New Jersey 07981(US)
Inventor: Verduin, Patricia
16-21 George Street
Fair Lawn New Jersey 07410(US)
Inventor: Arciszewski, Henry Eugene
896 Colonial Road
Franklin Lakes New Jersey 07417(US)
Inventor: Biggs, Richard Henry
53 East 19th Street
Paterson New Jersey 07524(US)

(74) Representative: Bonnetat, Christian et al
Cabinet PROPI Conseils 23 rue de Léningrad
F-75008 Paris(FR)

(54) Cookies with reduced sucrose content and doughs for production thereof.

(57) Sucrose-free or reduced sucrose cookies are prepared by replacing part or all of the sucrose with a combination of a glass-forming polysaccharide (preferably a maltodextrin) and a humectant sugar comprising lactose and/or dextrose. Multi-textured cookies can be prepared using the combination of glass-forming polysaccharide and humectant sugar in the firm outer layer, and a humectant sugar in the soft center.

EP 0 192 542 A2

## COOKIES WITH REDUCED SUCROSE CONTENT, AND DOUGHS FOR PRODUCTION THEREOF

This invention relates to cookies having reduced sucrose content, and to doughs for the production of such cookies. More specifically, the invention relates to cookies and doughs in which the sucrose content is reduced or eliminated, while still retaining a firm texture in the baked products prepared from the dough.

The complete or substantial elimination of sucrose from a conventional cookie dough which contains flour, water, sucrose, shortening and minor amounts of flavorants results in a "flaky" texture typical of biscuits. In addition, of course, the normal sweet taste of sucrose-containing cookies is lost. The changes in texture, sweetness, appearance, flavor and mouthfeel in the finished cookie produced from such a sucrose-reduced or -free dough are in general unattractive, and may in some cases restrict their use to dedicated dieters or people whose dietary intakes are restricted medicinally for reasons such as diabetes and excessive obeseness. Attempts have been made to use a variety of other saccharides to replace sucrose as a sweetening agent in cookie and other doughs. For example:

Ludewig, H.G. et al, Eingengung Verschiedener Staerkeverzucherungsprodukte zur Herstellung von Muerbkeksen (Suitability of various starch-derived sugar products for preparation of cookies), Getreide, Mehl und Brot, 32, 100 (1978), describes experiments in which attempts were made to replace sucrose in cookie doughs with one of a variety of glucose syrups, maltodextrin or a high-fructose glucose syrup. All of these saccharide materials produced major changes in the properties of the resultant cookies, even when only 30 percent of the sucrose was replaced with the other saccharide material. For example, replacement of 30 percent of the sucrose with maltodextrin produced cookies which had a hard texture, felt hard and splintery when bitten and gave insufficient browning. The cookies were not sweet and tasted bland. On the other hand, replacement of 30 percent of the sucrose with the fructose-glucose syrup produced cookies with a vivid yellowish color and a soft, oily bite.

It has been reported that the addition of dextrin to bread having a high honey solids content partially overcomes the tendency of the high quantity of honey solids to decrease the volume of the bread; see:

Glabe and Silverbrandt, Influence of Dextrin on Bread With High Honey Solids Content, Bakers Digest, 52(6), 16 (1978).

This article suggests that the dextrin appears to facilitate the gluten-water reaction by reducing the time necessary for the water to penetrate in to the flour protein.

Interactions between wheat and soy proteins and starch and differences in the ability to bind dextrins are discussed in:

Dahle, L. K. et al, Wheat protein-starch interaction. II. Comparative abilities of wheat and soy proteins to bind starch, Cereal Chemistry, 52(2), 212 (1975).

Dextrin made by hydrolyzing waxy starch with alpha and beta amylases has been stated to improve the quality of Japanese cakes; see:

Chemical Abstracts, 97, 108805h (1982) (Abstract of Japanese patent 82/47500 published March 18, 1982).

Also, addition of a compound containing 40-80 percent of oils and fats, 15-50 percent of water and 1-10 percent of cyclodextrin in an amount of from 1-40 percent to rice cracker dough has been thought to markedly improve crunchiness and texture of the resultant rice crackers; see:

Chemical Abstracts, 98, 196729k (1983) (Abstract of Japanese patent 83/43747 published March 14, 1983).

Chemical Abstracts 88, 188513p (1978) (Abstract of Japanese patent 78/3547 published January 13, 1978) states that the texture, flavor and taste of bakery products can be improved by adding thereto a mixture of calcium stearoyllactate, gelatin and dextrin or lactose.

Fructose is potentially sweeter than sucrose. Consequently, there is a theoretical advantage to replacing sucrose, in baked products which normally contain this sugar, with a smaller quantity of fructose to provide an equivalent degree of sweetness. Fructose has an agreeable sweetness and is claimed to be 15-80 percent sweeter than sucrose. See Schallenberger, R.S., J. Food Sci., 28, 584-89 (1963). However, the relative sweetness of fructose depends on its physical state; see Doty et al, Food Technology, 29, 34-38 (1975). Fructose is sweeter when cold, and neutral or slightly acidic pH, or in dilute solution.

U.S. Patents Nos. 4,137,336, 4,185,127 and 4,379,174, all to Radlove, state that the use of fructose as a replacement for sucrose to reduce the calories in baked goods has met with little success because fructose loses much of its sweetness upon heating of the batter. U.S. Patent No. 4,137,336 describes a dietetic cookie mix in which torula yeast, stearoyl monoglyceridyl citrates and propylene glycol monostearate are used to enable the fructose to retain a sufficient degree of sweetness while it is heating during the cookie baking process. U.S. Patent No. 4,185,127 describes a dietetic cake mix in which crystalline fructose is combined with baking powder having gluconodelta lactone as the acidic component and emulsifiers such as propylene glycol monostearate and lactated monoglycerides to obtain a product which has an acceptably sweet taste upon baking. In U.S. Patent No. 4,379,174, high fructose corn syrup is used to replace the expensive crystalline fructose used in the dietetic cake mix described in U.S. Patent No. 4,185,127.

Fructose is known to aid moisture retention in baked goods, but reportedly does not provide the texture, consistency or color that would encourage its widespread use in baked goods. See Alternative Sweetners, The Caloric Control Council, Atlanta, Georgia 30342, page 6 (June 3, 1980). Moreover, retention of water by the fructose would tend to produce a soft or moist texture as opposed to a firm texture in the baked goods.

The use of other humectant sugars, such as dextrose, corn syrups, invert syrups, high fructose corn syrups, honey, molasses and mixtures thereof, as a complete replacement for sucrose to provide a desired degree of sweetness to a baked product also tends to impart a soft or plastic-like texture to the baked goods. Additionally, replacement of the sucrose with at least one humectant sugar to reduce the quantity of sucrose used to less than 25 percent of the total weight of sugars, tends to result in a soft or plastic-like texture.

Substitution of maltodextrin (e.g. maltodextrins having a dextrose equivalent (DE) of 5 to 7) for sucrose substantially reduces the sweetness level of the baked cookie. Moreover, although maltodextrins do produce an amorphorous, glassy solid as a result of the dehydration accompanying baking, the glass-forming abilities of relatively low DE maltodextrins are such that the texture of the resultant cookie is perceived as undesirably brittle and not cookie-like. Moreover, replacement of the sucrose with maltodextrins causes a very severe reduction in cookie spread.

Cookie spread is known to be a relatively complex phenomenon influenced by a wide variety of factors, and numerous attempts have been made to find processes for the control of cookie spread. See, for example:

A.) Guertin, Viscosity as a Measure of Biscuit Flour Quality, Bakers Digest 22(4), 22 (1948);

B.) Fuhr, Cookie Spread--Its Effects on Production and Quality, Bakers Digest, 36(4), 56 (1962);

B.) Fuhr, Cookie Spread--Its Effects on Production and Quality, Bakers Digest, 36(4) , 56 (1962);

C.) Lorenz et al, Cookie Spread--Effects of Baking Under Varying Atmospheric Pressures, Bakers Digest, 46(3), 22 - (1972);

D.) Bakers Digest 46(3), 66 (1972);

E.) Finney et al, Effects of Varying Quantities of Sugar, Shortening and Ammoninum Bicarbonate on the Spreading and Top Grain of Sugar-Snap Cookies, Cereal Chemistry, 27(1), 30 (1950);

F.) Yamazaki, The Concentration of a Factor in Soft Wheat Flours Affecting Cookie Quality, Cereal Chemistry, 32(1), 26 (1955);

G.) Yamazaki, The Application of Heat in the Testing of Flours for Cookie Quality, Cereal Chemistry, 36(1), 59 - (1959);

H.) Sollars, Effects of Water-Soluble Constituents of Wheat Flour on Cookie Diameter, Cereal Chemistry, 36(6), 498 - (1959);

I.) Kissell et al, Effects of Flour Lipids on Cookie Quality, Cereal Chemistry, 48(6), 655 (1971);

J.) Kissell, Protein Enrichment of Cookie Flours with Wheat Gluten and Soy Flour Derivatives, Cereal Chemistry, 52(5), 538 (1975);

K.) Badi and Hoseney, Use of Sorghum and Pearl Millant Flours in Cookies, Cereal Chemistry, 53(5), 733 (1976);

L.) Yamazaki et al, Effects of Flour Fraction Composition on Cookie Diameter, Cereal Chemistry, 54(2), 352 (1977);

M.) Yamazaki et al, Note on Effect of Brown Lipids on Cookie Quality, Cereal Chemistry, 56(6), 584 (1979);

N.) Connor and Keagy, Folacin Retention and Cookie Diameter in Enriched Cookies: Regression Analysis Using Factorial Design, Cereal Chemistry, 58(3), 239 (1981);

O.) Matz, S.A., Cookie and Cracker Technology, AVI Publishing Company, Westport, Connecticut (1978), pages 4, 5, 16, 17, 123-125 and 135;

P.) Manelley, D.J.R., Technology of Biscuits, Crackers and Cookies, Ellis Horwood, Chichester, England (1983), pages 211-214;

Q.) Chemical Abstracts, 64, 18304e (1966) (Abstract of Sollars and Bowie, Cereal Chemistry, 43(2), 244-60 - (1966));

R.) Shellenberger, Chlorine Bleach and Cookie Doughs, Bakers Digest, 15(11) , 206 (1941);

S.) Bakers Digest, 38(1), 82 (1964)

T.) Bakers Digest, 41(5), 123 (1967)

U.) Report of the 1942-1943 Committee on Testing Biscuit Cracker Flours, Cereal Chemistry, 20(5), 595 (1943); and

V.) Yamazaki, An Alkaline Water Retention Capacity Test for the Evaluation of Cookie Baking Potentialities of Soft Winter Wheat Flours, Cereal Chemistry, 30(3), 242 (1953).

Among the methods for increasing cookie spread suggested in these references are addition of flour or bran lipids to the dough (references I, J and M), addition of soybean or safflower lecithins to the dough (references J and K), increasing the baking time at lower baking temperatures (reference N), using coarse flour particles (references D and P), using a cold ovenband at the time of deposition of the dough pieces (reference P), decreasing the atmospheric pressure during baking (reference C), elimination of the hydrophilic starch tailings or water-soluble polysaccharides from flour (references F, H, L and Q), using a greasy ovenband (reference P), using a dough of high pH with an increase in the amount of ammonium bicarbonate - (references E, N, O and P), using low temperatures in the front of the oven (references O and P), using a low viscosity flour (references A, D and G), covering up the flour hydration sites (reference B), using minimal mixing prior to dough standing (reference P), pretreatment of the flour with enzymes to lower its viscosity (reference A), pretreatment of the flour with sulfides and xanthates to lower its viscosity - (reference A) and producing soft doughs using higher temperatures (references B, N and P). Many of these methods are difficult or costly to apply to high throughput industrial processes for the production of cookies, and it seems doubtful whether any of these methods, alone or in combination, would overcome the very great reduction in cookie spread experienced when sucrose is replaced with maltodextrins in cookie doughs.

There is thus a need for methods of reducing or eliminating the sucrose content of cookie doughs and employing maltodextrins which does not give rise to the problems of lack of sweetness, brittleness of texture and lack of spread. This invention provides such a cookie dough and cookies produced therefrom.

This invention provides a process and a cookie dough composition for producing cookies having a firm texture, the process and dough composition using, as a sweetening agent, an edible glass-forming polysaccharide and a humectant sugar comprising lactose and/or dextrose.

This invention also provides a cookie dough composition for producing a multi-textured cookie in which the outer layer has a firm texture, the composition having a center formed of a first cookie dough comprising flour, fat or shortening and a humectant, and an outer layer surrounding the center, the outer layer being formed of a second cookie dough comprising flour, a fat or shortening, a glass-forming polysaccharide and a humectant sugar comprising lactose and/or dextrose.

The term "polysaccharide" is used herein to denote any saccharide, or mixture of saccharides, containing an average of at least about 3 saccharide units per molecule. The term "polysaccharide" as used herein thus excludes pure monosaccharides and disaccharides, but includes trisaccharides, tetrasaccharides and higher polymers, together with mixtures of such higher polymers with minor amounts of mono-and disaccharides, provided that the average number of saccharide units per molecule is at least about 3.

In the process and cookie of the present invention, a mixture of an edible glass-forming polysaccharide and a humectant sugar comprising lactose and/or dextrose is used as the sweetening agent. It has been found that the use of this sweetening agent in at least one dough used to prepare the cookie provides the resultant dough portion of the baked cookie with a shelf-stable firm, non-brittle texture, without adversely affecting oven spread of the cookie during baking.

It has been found that, in accordance with the invention, the use of an edible glass-forming polysaccharide in combination with a humectant sugar in the process and cookie of the invention produces in the baked cookie a firm non-brittle texture which when appropriate ratios of ingredients are employed resembles that obtained by baking a conventional sugar cookie. Conventional packaging techniques preferably are used to package the cookies of the invention, such that the firm baked dough texture produced by the glass-forming polysaccharide/humectant sugar sweetening agent is retained for extended periods of time.

Although other glass-forming polysaccharides, for example hydrolyzed cereal solids, corn syrup solids and hydrogenated starch hyrolyzates, can be used in the processes and cookies of this invention, the preferred glass-forming polysaccharides are maltodextrins. Maltodextrins are commercially-available products produced by hydrolysis of starch (normally corn starch) and are extensively discussed in the literature. See, for example:

Hackh's Chemical Dictionary, third edition, the Blakiston Company, Philadelphia (1944), pages 11, 53 262, 313, 383 and 510;

DeMan, J., Principles of Food Chemistry, AVI Publishing Company, Inc., Westport, Connecticut (1980) pages 154-155;

Pancoast, H. M. et al, Handbook of Sugars, AVI Publishing Company, Inc., Westport, Connecticut (1980), pages 154-155, 168, 281-284, 286, 409-410, 422, 532 and 595;

Radley, J. A., Starch and its Derivatives, Wiley, New York, New York, Third Edition (1954), volume 1, pages 52-53, 57, 114-117, 120-121, 224-235, 278-279, 282-283, 286-297, 380-381, 396-397, 418-337 and 468-469;

Pringsheim, H., The Chemistry of the Monosaccharides and of the Polysaccharides, McGraw-Hill, New York, New York, (1932), page 271-295;

Lineback, D. R. and Inglett, G. E., Food Carbohydrates, AVI Publishing Company, Inc., Westport, Connecticut - (1982), pages 257-258, 260 and 268;

Matz, S., Cereal Technology, AVI Publishing Company, Inc., Westport, Connecticut (1970), pages 186 and 188;

Rose, A. and Rose, E., The Condensed Chemical Dictionary, fifth edition, Reinhold, New York, New York (1956), page 350;

The Merck Index, Merck and Company, Inc., Rahway, New Jersey, Eighth edition, (1968), page 355;

Ockerman, H., Sourcebook for Food Scientists, AVI Publishing Company, Inc., Westport, Connecticut (1978), pages 89, 797 and 832;

Whistler, R. L. and Paschall, E. F. (Editors) Starch: Chemistry and Technology, Academic Press, New York, New York (1967) Volume II, pages 253-278;

Radley, J. A., Industrial Uses of Starch and its Derivatives, Applied Science Publishers Ltd., London, England (1967) pages 96-97 and 106;

Kerr, R. W., Chemistry and Industry of Starch, Academic Press, New York, New York, second edition (1950), pages 210-215, 240-243, 345-373, 412-417 and 443-453; and

Banks, W., and Greenwood, C. T., Starch and its Components, Edinburgh University Press, Scotland (1975).

As described in the above references, maltodextrins are produced by hydrolysis, normally enzymatic hydrolysis, of starch. The degree of hydrolysis effected in the starch starting material to produce a particular maltodextrin is conventionally measured as the dextrose equivalent (DE) of the maltodextrin. The higher the dextrose equivalent of a maltodextrin, the greater the degree of hydrolysis of the starch and the lower the average molecular weight of the maltodextrin. The dextrose equivalent of maltodextrins range from about 4 to about 25. In order to produce the optimum texture in the baked cookie, we prefer to use, in the process and compositions of the invention, maltodextrins having a dextrose equivalent of 5 to 15 and desirably 10 to 15. In such preferred maltodextrins, at least 90 percent of the weight of the carbohydrate in the maltodextrin is in the form of tetra-or higher polysaccharides. Suitable maltodextrins typically have at least about 85 percent by weight of the carbohydrate in the form of tetra-or higher polysaccharides. Two specific preferred commercially-available maltodextrins are the materials sold by American Maize-Products Company, Corn Processing Division, 1100 Indianapolis Boulevard, Hammond, Indiana 43620 under the trademarks Lo-Dex 5 and 10. Lo-Dex 5 contains less than 1 percent of monosaccharides, less than 2 percent of disaccharides, less than 2 percent of trisaccharides and at least 95 percent of tetra-and higher polysaccharides (by weight, on the basis of total weight of saccharides present), while Lo-Dex 10 contains approximately 1 percent of monosaccharides, 4 percent of disaccharides, 5 percent of trisaccharides and 90 percent of tetra-and higher polysaccharides.

A variety of humectant sugars, for example honey, molasses, maltose, sorbose, mannose, galactose, corn syrups, high fructose corn syrups and invert syrups can be used in the processes and cookies of this invention. Mixtures of such humectant sugars can of course be used.

The cookie dough desireably contains some dextrose to ensure proper browning during baking. In order to provide the desired combination of sweetness and texture in the baked cookie the humectant sugar preferably comprises a mixture of lactose and dextrose.

When fructose is used, it is conveniently provided in the form of a high fructose corn syrup. High fructose corn syrups are low in cost, are highly humectant, provide a pleasant sweet taste, and are readily commercially available. They are prepared by the enzymatic isomerization of dextrose containing corn syrups, and typically possess a sugar solids component of about 40 percent to about 100 percent by weight fructose, with the balance of the non-fructose sugar solids being primarily dextrose plus minor amounts of other monosaccharides. The sugar solids content of commercially available high fructose corn syrups typically ranges from about 70 percent to 73 percent, up to about 82 percent by weight. Commercially available high fructose corn syrups having at least 80 percent by weight of their solids as fructose are readily available and are preferred for use in the process and compositions of the present invention.

The amounts of glass-forming polysaccharide and humectant sugar used in the processes and compositions of the invention will of course vary depending upon the desired taste of the cookie, and upon the quantities of the glass-forming polysaccharide and humectant sugar necessary to achieve the desired degree of cookie spread and the desired texture in the final product. Although the optimum amounts of glass-forming polysaccharide and humectant sugar can of course be determined empirically by routine tests, in general it may be stated that the total quantity of glass-forming polysaccharide and humectant sugar for any particular application should be approximately the same as the weight of sucrose which it replaces. The glass-forming polysaccharide is suitably added to the dough in an amount of from about 4 to about 15 percent by weight of the dough. Typical amounts generally range from about 5 to about 10 percent by weight of the dough. (All references herein to proportions by weight of the dough are to proportions by weight of the substantially homogeneous dough mixture itself, i.e. excluding heterogeneous inclusions such as chocolate chips, nuts, cream fillings etc. which are frequently added to cookies.)

The quantity of humectant sugar added to the dough is suitably from about 4 to about 12 percent by weight of the dough and preferably in an amount from about 6 to about 10 percent by weight of the dough.

In order that the quantity of humectant sugar present will be sufficient to provide a proper level of sweetness, and overcome the tendency of glass-forming polysaccharide-containing cookies to have a brittle texture, the ratio of the amount of glass-forming polysaccharide to humectant sugar is preferably adjusted. This ratio is suitably in the range of from about 1.5:1 to about 0.4:1. Higher ratios in the range of from about 3:1 to about 1:1, desirably in the range from about 2.5:1 to about 1.5:1, may be used with increasing proportions of fructose in the humectant sugar. When fructose is used, the glass-forming polysaccharides may desirably be added to the dough in an amount from about 10 to about 20 percent by weight of the dough, preferably from about 12 to aobut 8 percent by weight of the dough.

In the processes and compositions of the invention, sucrose typically comprises no more than about 70 percent by weight of the sweetening agent which comprises the glass-forming polysaccharide, the sucrose, and the humectant sugar.

The sweetening agent can be used in preparing multi-textured cookies in which first and second cookie doughs are separately prepared, and a portion of the first cookie dough (hereinafter referred to as the "inner" or "filler" dough) is enrobed within a portion of the second cookie dough (hereinafter referred to as the "outer" or "casing" dough) and baked to produce a multi-textured cookie in which the center (derived from the filler dough) and the outer layer (derived from the casing dough) differ in texture, the compositions of the doughs normally being chosen so that the center has a softer, more plastic-like texture than the outer layer.

The two cookie doughs may be combined by coextrusion through concentric dies to obtain a coextrudate rope with the filler dough inside and the casing dough outside. The coextrudate rope may then be cut into pieces using a reciprocating cutter which severs the rope and stretches the casing dough to close the end portions of the rope so as to obtain a composite dough piece in which a center formed of the filler dough is completely surrounded by an outer layer formed of the casing dough, this composite dough piece thus being bakeable to form a multi-textured cookie. Apparatus for forming the composite dough piece is known in the art.

The composite dough pieces bakeable to multi-textured cookies preferably having a weight ratio of the filler cookie dough to the casing cookie dough within the range of from about 0.80 to about 1.2, approximately equal amounts of each dough being preferred.

When the process of the invention is employed to produce such a multi-textured cookie, the combination of the glass-forming polysaccharide and the humectant sugar is preferably employed only in the casing dough. Any of the known sweeteners suitable for producing a soft, plastic-like texture may be used in the filler dough.

The filler cookie dough used in producing multi-textured cookies by the process of the present invention may be any of the cookie doughs known to be capable of producing a soft or plastic-like texture in the center of a multi-textured cookie. As is well known to those skilled in the art a soft or plastic-like texture in the center of a multi-textured cookie can be achieved by including a humectant in the filler cookie dough used to produce this center. When humectants are added to a cookie dough, the product baked from such a dough will possess a plastic, moist and non-hardening crumb structure, which will be retained during storage in conventional packing for periods greater than two weeks and up to several months. A wide variety of food-compatible humectants may be employed for imparting shelf-stable soft and moist texture to the centers of the multi-textured cookies produced by the process of the present invention. Humectants which can be employed include sugar and/or non-sugar ingredients which bind moisture in a baked dough. If a non-sugar humectant is employed, the filler cookie dough may also need to include a sugar to provide the requisite degree of sweetness to the center of the cookie. The binding should be such that the equilibrium rate of moisture loss from the cookie to the environment due to the presence of the humectant is slowed to such a degree that a multi-textured cookie containing the humectant in its center, and having an initial moisture content of at least about 6 percent, retains in its center a soft and pliable texture for at least about 2 months, and preferably for at least about 4-6 months, when the cookie is stored in a closed container.

Edible humectant gels such as a humectant sucrose gel and/or a high fructose corn syrup gel can be used in the filler cookie dough for achieving a soft, plastic-like texture which is stable for prolonged periods. Preparation of the gels and of doughs containing them for producing soft edible baked products having extended shelf life is taught in U.S. Patent No. 4,444,799. A humectant sucrose gel can be prepared, for example, from a mixture of sucrose syrup, sodium alginate, and a calcium ion source. The gels may also be prepared as taught in pending U.S. application Serial No. 712,206, filed March 15, 1985, which is a continuation of U.S. application Serial No. 580,365, filed February 15, 1984, which is a continuation-in-part of the application which issued as U.S. Patent No. 4,444,799. The aforementioned patent and pending application Serial No. 712,206 are both incorporated herein by reference in their entirety.

Humectant sugars may be employed alone or in combination with non-humectant sugars (such as sucrose) in the filler cookie dough to impart a soft or plastic-like texture to the center of the multi-textured cookie. Suitable humectant sugars include fructose, maltose, sorbose, dextrose, lactose, galactose, corn syrups, invert syrups, high fructose corn syrups, honey, molasses, as well as mixtures of one or more of the foregoing humectants with sucrose. For example, a suitable humectant sugar composition for use in the filler cookie dough may comprise about 0 to 85 percent sucrose, with the balance of the sugar being comprised of fructose and/or dextrose employed in the form of crystallized sugar. Alternatively, the balance of the sugar may be provided by the sugar solids content of a corn syrup, honey or a high fructose corn syrup, or another humectant sugar.

Commercially available high fructose corn syrups are prepared by the enzymatic isomerization of dextrose containing corn syrups, and typically possess a sugar solids component of about 40 percent to about 100 percent by weight fructose, with the balance of the non-fructose sugar solids being primarily dextrose plus minor amounts of other monosaccharides. The sugar solids content of commercially available high fructose corn syrups typically ranges from about 70 percent to about 73 percent, up to about 82 percent by weight. When sucrose is employed in the filler cookie dough, the humectant sugar should comprise at least about 15 percent, and preferably at least about 20 percent, by weight of the total sugar solids content of the filler cookie dough.

In addition to the humectant sugars, a wide variety of humectants which are not sugars all possess a low degree of sweetness relative to sucrose may also be employed in the filler cookie dough. For example, the use of glycerol, sugar alcohols such as mannitol, maltitol, xylitol and sorbitol, and other polyols, as humectants is well known in the art. Additional examples of humectant polyols (i.e. polyhydric alcohols) include humectant glycols, for example, propylene glycol, hydrogenated glucose syrups, sugar esters, dextrins, and other starch hydrolyzation products. When sucrose is employed in combination with one or more of the foregoing humectants, the humectant should comprise at least about 15 percent, and preferably at least about 20 percent, by weight of the humectant and sucrose combination.

The humectant may be included in the dough as an added ingredient, or an enzyme may be included in the dough formulation which acts on a substrate also included in the dough during, before or after baking, to produce effective amounts of the humectant in situ in the dough. Examples of suitable enzymes for the purpose include invertase which effects the inversion of sucrose to invert sugar, as well as other glycosidases and polysaccharidases which after acting on carbohydrates present in the dough produce humectants as the by-products of their enzymatic activity.

Enzymes suitable for use in this manner include polysaccharidases which act upon farinaceous materials to produce lower molecular weight saccharides such as glucose, maltose, modified starches, dextrins, etc. Enzymes of this type include alpha-and beta-amylases. Alpha-amylases, such as those obtained from bacterial sources - (Bacillussubtilis or B.mesintericus) are known to be heat-stable, and have been reported to be able to retain some activity at temperatures as high as 100°C. The number of SKB units of amylase enzyme per 100 grams of flour will typically be about 6 to 1,000 units. Pregelatinized starch may be added to the dough to produce a readily available substrate for the enzyme. SKB units may be assayed by the method of Sandstetde, Kneen and Blish, described in Cereal Chemistry, 16, 712 (1939). Amylase enzymes are commercially available, and include Fresh-N, a product of G. B. Fermentation Industries Inc., Charlotte, North Carolina, as well as Termanyl and Bacterial Amylase Novo - (Ban) which are products of Novo Industry A/S, Novo Alle, DK-2880, Bagsvaerd, Denmark.

The flour and shortening employed in the process and compositions of this invention are selected from conventional ingredient lines. The flour component may be any comminuted cereal grain or edible seed meal such as wheat flour, corn flour, corn starch, modified starch, rice flour, potato flour, barley flour, or the like. Wheat flour is preferred. The wheat flour may be bleached or unbleached, although bleached flour tends to give less oven spread during baking.

The shortening may be any edible fat or oil or mixtures thereof suitable for baking applications, and may further include conventional food-grade emulsifiers. The shortening may be present in each dough in amounts ranging from about 20 percent to about 80 percent by weight, based upon the weight of the flour.

The dough(s) may contain from about 0 percent to about 5 percent by weight of a leavening system, based upon the weight of the flour in each dough. The leavening system employed in each dough may be the same or different.

In addition to the foregoing, the dough(s) may include other additives conventionally employed in cookie products. Exemplary thereof are milk products or milk by-products, egg products or egg by-products, cocoa, vanilla, cereal - (oatmeal), as well as inclusions such as nuts, raisins, coconut, flavor chips, such as chocolate chips, butterscotch chips, caramel chips, and the like. If flavor chips are to be added, they are preferably added as the last ingredient to the dough with minimal mixing so as to avoid smearing of the flavor chips into the dough.

The dough(s) used in the process and compositions of the present invention can each be prepared in a conventional manner using a creaming stage and a dough forming stage. However, the preferred technique for admixing the glass-forming polysaccharide and humectant sugar with the other ingredients of the dough in the process of the invention differs somewhat from the conventional process normally employed to mix sucrose into a sucrose-containing dough. When using sucrose, part of the sucrose is mixed with the fat or shortening in the creaming stage and then the remainder of the sucrose is added together with the flour later in the dough-forming stage. If this procedure is adopted with a glass-forming polysaccharide, the polysaccharide tends to form undesirable lumps in the dough-forming stage. In order to produce good mixing of the glass-forming polysaccharide with the remaining components of the dough, we prefer to first blend the whole of the polysaccharide with the fat or shortening, and thereafter to blend the resultant mixture first with the humectant sugar and then with the flour.

The time and temperature of baking the dough compositions of the present invention to prepare finished cookies are adjusted in accordance with conventional techniques to provide a moisture content in the baked cookie of about 5 percent or above. The preferred moisture content ranges from about 6 percent to about 7 percent or more, based upon the weight of the baked cookie, depending upon the texture desired. The water activity of the baked cookie should be less than about 0.7, preferably less than or equal to about 0.6, to assure microbial shelf stability. While baking time and temperatures will vary for different dough formulations, oven type, etc., in general, commercial cookie baking times may range from about 5 minutes to 15 minutes, and baking temperatures for cookies may range from about 250°F to about 500°F.

The cookie dough compositions of the present invention may be used for the production of drop-type cookies, such as chocolate chip cookies, oatmeal cookies, peanut butter cookies, sugar cookies, and the like.

The present invention is further illustrated in the following Examples where all parts, ratios and percentages are by weight and all temperatures are in degrees F, unless otherwise stated:

Example 1

This Example illustrates the preparation of a multi-textured chocolate chip cookie of the invention in which the casing dough comprises a maltodextrin, lactose, dextrose and sucrose.

A casing dough was prepared from the following ingredients:

| Ingredients | Parts by Weight |
|---|---|
| Bleached medium wheat flour | 323.8 |
| Maltodextrin (Lo-dex 10)* | 46.2 |
| Lactose | 46.2 |
| Dextrose | 49.5 |
| Sucrose | 92.5 |
| Molasses | 8.1 |
| Vegetable shortening | 161.9 |
| Sodium bicarbonate | 4.9 |
| Sodium acid pyrophosphate #4 | 0.9 |
| Minor flavoring and texturizing ingredients (whole egg powder, salt, vanilla, caramel color) | 9.16 |
| Soybean spray oil | 32.4 |
| Chocolate drops (10,000 count) | 161.9 |
| Water | 62.5 |
| | 1000.0 |

* Lo-Dex 10 is a maltodextrin produced by hydrolyzing corn starch and sold commercially by American Maize-Products Company, Corn Processing Division, 1100 Indianapolis Boulevard, Hammond, Indiana 46320. Lo-Dex 10 is a low dextrose equivalent product which is essentially non-deliquescent, bland and has a very low sweetness level. The manufacturer's data sheet quotes typical chemical and physical data as being 4.5 percent moisture content, a dextrose equivalent of 12 percent, a sulfur dioxide level of 40 parts per million, a pH (in 1:1 aqueous dispersion) of 4.7 and a bulk density of 30 pounds per cubic foot. The approximate carbohydrate composition is stated to be 1 percent of monosaccharides, 4 percent of disaccharides, 5 percent of trisaccharides and 90 percent of tetra-or higher polysaccharides. Physically, the product is a pure white powder having a particle size distribution of 100 percent through 40 U.S. mesh and 65 percent through 200 U.S. mesh.

Thirty point eight parts of the sugar, the vegetable shortening, lactose, dextrose, salt, whole egg powder and the spray oil were placed in a Hobart mixing bowl, then mixed for 1 minute at low speed and 2 minutes at high speed. The vanilla, molasses, color and water were added and the resultant mixture mixed for one minute at low speed. The flour, sodium bicarbonate and sodium acid pyrophosphate were added and the resultant mixture mixed for three minutes at low speed. The remaining sugar was added and the resultant mixture mixed for one minute at low speed. Finally, the chocolate chips were added and the resultant mixture mixed for one minute at low speed.

A filler dough was prepared from the following ingredients:

| Ingredient | Parts by Weight |
|---|---|
| Bleached medium wheat flour | 281.4 |
| Vegetable shortening | 107.0 |
| Starch | 23.9 |
| Non-fat dried milk | 11.3 |
| Sucrose | 70.4 |
| High fructose corn syrup* | 249.0 |
| Sodium bicarbonate | 4.2 |
| Ammonium bicarbonate | 0.5 |
| Sodium acid pyrophosphate #4 | 0.9 |
| Minor flavoring and texturizing ingredients (whole egg powder, salt, caramel color and vanilla) | 9.3 |
| Water | 31.0 |
| Chocolate drops (4,200 count) | 211.1 |
| | 1000.0 |

*The high fructose corn syrup used contained 70.5 to 72.5 percent by weight solids, of which 41-43 percent was fructose.

The filler dough was prepared by adding the sucrose, vegetable shortening, starch, non-fat dried milk, whole egg powder, salt and 46.9 parts of the flour to the Hobart mixing bowl and mixing for one minute at low speed followed by two minutes at high speed. Next, the color, ammonium bicarbonate, water and vanilla were added and the resultant mixture mixed for two minutes at low speed. The high fructose corn syrup was added and the resultant mixture mixed for two minutes at low speed. The remaining flour, sodium bicarbonate and sodium acid pyrophosphate were then added and the resultant mixture mixed for three minutes at low speed. Finally, the chocolate chips were added and the resultant mixture mixed for one minute at low speed to produce the finished filler dough.

Multi-textured cookies were prepared from the casing and filler doughs by enrobing 6.4 g. portions of the filler dough in 6.4 g. portions of the casing dough and baking on trays for 6 minutes at 400°F (204°C). The resultant cookies were allowed to cool on the trays for minute minute, then removed from the trays. Further batches of cookies were prepared in the same manner but using baking times of 7 and 8 minutes respectively at 400°F.

The textures of the three batches of cookies thus prepared were measured using a penetration test. In this test, a probe was driven 2mm. into the upper surface of the cookie and the peak resistance to penetration measured. The probe was then allowed to remain at 2mm. penetration for two minutes and the resistance to the probe measured after this two minute period; this reading is denoted "2 minute relaxation". Finally, the probe was driven to a penetration of 14mm., i.e., completely through the cookie, and the peak resistance measured. The tests were conducted on 10 cookies from each batch and the average value of each reading, the standard deviation and the coefficient of variation are given below:

Texture Analysis

| Baking time, minutes | | 2 mm. peak, g. | 2 min., g. relaxation | 14 mm. peak, g. |
|---|---|---|---|---|
| 6 | X | 435.5 | 106.5 | 441.0 |
| | $S_D$ | 78.65 | 27.79 | 62.75 |
| | CV% | 18.06 | 26.09 | 14.23 |
| 7 | $\overline{X}$ | 720.5 | 188.5 | 868.0 |
| | $S_D$ | 275.32 | 54.06 | 164.39 |
| | CV% | 38.21 | 28.68 | 18.94 |
| 8 | $\overline{X}$ | 1522.22 | 289.25 | 1,760.0 |
| | $S_D$ | 266.1 | 53.19 | 307.53 |
| | CV% | 17.5 | 18.39 | 17.47 |

Example 2

This Example illustrates how a multi-textured chocolate chip cookie of the invention could be prepared in which the casing dough would comprise a maltodextrin, lactose, and dextrose. The ingredients and their relative amounts which may be used to prepare the casing dough are:

| Ingredients | Parts by Weight |
|---|---|
| Lactose | 5.0 |
| Dextrose, Anhydrous | 20.0 |
| Maltodextrin (Maltrin M100*) | 20.0 |
| Vegetable Shortening | 50.0 |
| Rapeseed Spray Oil | 10.0 |
| Minor Flavoring and Texturizing Ingredients (whole egg powder, salt, caramel color, chocolate and vanilla flavor) | 3.3 |
| Molasses | 2.5 |
| Water | 22.0 |
| Bleached Flour | 100.0 |
| Sodium Bicarbonate | 2.0 |
| Sodium Acid Pyrophosphate | 0.8 |
| Chocolate Chips (10,000 CCP) | 25.0 |
| Sucrose | 65.0 |
| | 325.6 |

Maltrin M100 is a maltodextrin sold commercially by Grain Processing Corporation, 1600 Oregon, Muscatine, Iowa 52761. Maltrin M100 is a low dextrose equivalent product which is bland, free-flowing, and has a very low sweetness level. The manufacturer's data sheet quotes typical chemical and physical data as being 6.0 percent moisture content, a dextrose equivalent of 9.0-12.0 percent and a pH of 4.0-4.7 (20 percent solution). The approximate carbohydrate composition is stated to be 1 percent of monosaccharides, 4 percent of disaccharides, 6 percent of trisaccharides, 5 percent of tetrasaccharides, and 84 percent of penta-or higher polysaccharides. Physically, the product is a white carbohydrate powder.

Thirty-five parts of the sugar, the lactose, dextrose, maltodextrin, vegetable shortening, spray oil, salt, whole egg powder, caramel color, and chocolate and vanilla flavorings are creamed together for 3 minutes at low speed in a mixing bowl. The molasses and water are then added and the resultant mixture mixed for 2 minutes at low speed. The flour, sodium bicarbonate, and sodium acid pyrophosphate are then added and the resultant mixture mixed for 2 minutes at low speed. Finally the remaining sugar and chocolate chips are added and the resultant mixture mixed for one minute at low speed.

The ingredients and their relative amounts which may be used to prepare a filler dough are:

| Ingredients | Parts by Weight |
|---|---|
| Vegetable Shortening | 20.0 |
| Margarine | 30.0 |
| Sucrose | 21.5 |
| Modified Corn Starch | 8.5 |
| High Fructose Corn Syrup (about 73% by weight solids, 42% fructose, 50% dextrose) | 75.0 |
| Honey | 3.0 |
| Glycerine | 6.0 |
| Ammonium Bicarbonate | 0.3 |
| Water | 2.0 |
| Bleached Flour | 100.0 |
| Sodium Bicarbonate | 0.5 |
| Sodium Acid Pyrophosphate | 0.3 |
| Minor Flavor And Texturizing Ingredients (skim milk, salt, whole egg powder, cocoa, vanilla, and caramel color) | 8.0 |
| Chocolate Chips (1200 CCP) | 85.0 |
| | 352.1 |

The filler dough is prepared by creaming the vegetable shortening, margarine, sugar, starch, skim milk, salt, whole egg powder, cocoa, vanilla flavor and caramel color in a mixing bowl for 3 minutes at low speed. The high fructose corn syrup, honey, glycerine, ammonium bicarbonate, and water are then added, and the resultant mixture mixed at low speed for 2 minutes. Next, the flour, sodium bicarbonate, and sodium acid pyrophosphate are added and the low speed mixing continued for a further 2 minutes. Finally, the chocolate chips are added and the low speed mixing continued for a further minute to produce the finished filler dough.

The cookies are prepared by enrobing 6.5g portions of filler dough in 6.5g portions of the casing dough and baking the enrobed dough pieces at 400°F (204°C) for 7.5 minutes.

Example 3

This Example illustrates how a multi-textured peanut butter chocolate chip cookie of the invention could be prepared in which the casing dough would comprise a maltodextrin, lactose, and dextrose.

The ingredients and their relative amounts which may be used to prepare the casing dough are:

| Ingredients | Parts by Weight |
|---|---|
| Lactose | 5.0 |
| Dextrose, Anhydrous | 20.0 |
| Maltodextrin (Maltrin M100) | 20.0 |
| Vegetable Shortening | 54.0 |
| Minor Flavor and Texturizing Ingredients (peanut butter flavor, salt, whole egg powder, and vanilla flavor) | 3.0 |
| Cocoa | 10.0 |
| Corn syrup (about 64DE 43° Baume, 79% by weight solids) | 4.0 |
| Water | 30.0 |
| Ammonium Bicarbonate | 0.3 |
| Flour | 100.0 |
| Sodium Acid Pyrophosphate | 0.6 |
| Sodium Bicarbonate | 1.5 |
| Chocolate Liquor | 2.5 |
| Chocolate Chips (10,000 CPP) | 7.0 |
| Peanut Butter Chips (10,000 CPP) | 7.0 |
| Sucrose | 35.0 |
| | 299.9 |

Twenty parts of the sugar, the lactose, dextrose maltodextrin, vegetable shortening, peanut butter and vanilla flavorings, cocoa, salt, and whole egg powder are added to a mixing bowl and creamed about 3 minutes at low speed. Then the glucose, water, and ammonium bicarbonate are added and the resultant mixture mixed for two minutes at low speed. The flour, sodium acid pyrophosphate, sodium bicarbonate, and chocolate liquor are then added, and the low speed mixing continued about another 2 minutes. Finally the remaining sugar and chocolate and peanut chips are added, and the low speed mixing continued for a further minute.

The ingredients and their relative amounts which may be used to prepare a filler dough are:

| Ingredients | Parts by Weight |
|---|---|
| Sucrose | 31.0 |
| Vegetable Shortening | 20.0 |
| Margarine | 30.0 |
| Modified Corn Starch | 10.5 |
| Minor Flavoring and Texturizing Ingredients (peanut butter flavor, salt, and skim milk powder) | 5.5 |
| Cocoa | 7.5 |
| High Fructose Corn Syrup (about 73% by weight solids, 42% fructose, 50% dextrose) | 90.0 |
| Ammonium Bicarbonate | 0.3 |
| Honey | 3.0 |
| Glycerine | 6.0 |
| Water | 2.0 |
| Flour | 100.0 |
| Chocolate Liquor | 2.0 |
| Sodium Acid Pyrophosphate | 0.6 |
| Sodium Bicarbonate | 1.5 |
| Peanut Butter Chips (1,200 CPP) | 44.0 |
| Chocolate Chips (1,200 CPP) | 40.0 |
| | 393.9 |

The filler dough is prepared by creaming together the sucrose, vegetable shortening, margarine, starch, peanut butter flavor, salt, skim milk powder, and cocoa for 3 minutes at low speed in a mixing bowl. Next, the high fructose corn syrup, ammonium bicarbonate, honey, glycerine, and water are added and the resultant mixture mixed for two minutes at low speed. Then, the flour, chocolate liquor, sodium acid pyrophosphate, and sodium bicarbonate are added and the low speed mixing continued for another two minutes. Finally, the peanut butter and chocolate chips are added and the low speed mixing continued for another minute.

The cookies are prepared by enrobing 6.5g portions of the filler dough in 6.5g portions of the casing dough and baking the enrobed dough pieces at 400°F (204°C) for 7.5 minutes.

Example 4

This Example illustrates how a multi-textured almond fudge cookie of the invention could be prepared in which the casing dough would comprise a maltodextrin, lactose, and dextrose.

The ingredients and their relative amounts which may be used to prepare the casing dough are:

| Ingredients | Parts by Weight |
|---|---|
| Lactose | 5.0 |
| Dextrose, Anhydrous | 20.0 |
| Maltodextrin (Maltrin M100) | 20.0 |
| Vegetable Shortening | 54.0 |
| Minor Flavoring and Texturizing Ingredients (salt, whole egg powder, and vanilla flavor) | 2.6 |
| Cocoa | 10.0 |
| Corn Syrup (about 64 DE, 43° Baume, 79% by weight solids) | 4.0 |
| Water | 30.0 |
| Ammonium Bicarbonate | 0.3 |
| Flour | 100.0 |
| Sodium Bicarbonate | 1.5 |
| Sodium Acid Pyrophosphate | 0.6 |
| Chocolate Liquor | 2.5 |
| Chocolate Chips (10,000 CPP) | 7.0 |
| Chopped Almonds | 7.0 |
| Sucrose | 35.0 |
| | 299.5 |

To prepare the casing dough, 20 parts of the sucrose, the lactose, dextrose, maltodextrin, vegetable shortening, salt, whole egg powder, cocoa, and vanilla flavor are creamed in a mixing bowl at low speed for 3 minutes. Then, the corn syrup, water, and ammonium bicarbonate are added and the resultant mixture mixed at low speed for 2 minutes. The low speed mixing is continued for another two minutes after the addition of the flour, sodium bicarbonate, sodium acid pyrophosphate, and chocolate liquor. Finally, the chocolate chips, almonds, and remaining sucrose are added and the low speed mixing continued for a further 1 minute.

The ingredients and their relative amounts which may be used to prepare the filler dough for the almond chocolate chip cookies are:

| Ingredients | Parts by Weight |
|---|---|
| Sucrose | 21.5 |
| Margarine | 30.0 |
| Vegetable Shortening | 20.0 |
| Modified Corn Starch | 10.5 |
| Salt | 1.5 |
| Skim Milk Powder | 3.8 |
| Cocoa | 7.5 |
| High Fructose Corn Syrup (about 73% by weight solids, 42% fructose, 50% dextrose) | 90.0 |
| Ammonium Bicarbonate | 0.3 |
| Honey | 3.0 |
| Glycerine | 6.0 |
| Water | 2.0 |
| Flour | 100.0 |
| Chocolate Liquor | 2.3 |
| Sodium Acid Pyrophosphate | 0.6 |
| Sodium Bicarbonate | 1.5 |
| Chopped Almonds | 38.0 |
| Chocolate Chips (1,200 CPP) | 38.0 |
| | 376.5 |

The sucrose, margarine, vegetable shortening, starch, salt, skim milk powder, and cocoa are creamed together for 3 minutes at low speed in a mixing bowl. The high fructose corn syrup, ammonium bicarbonate, honey, glycerine, and water are then added and the resultant mixture mixed together about 2 minutes at low speed. Next, the flour, chocolate liquor, sodium acid pyrophosphate, and sodium bicarbonate are added and the low speed mixing continued for another 2 minutes. Finally, the almonds and chocolate chips are added and the low speed mixing continued about another minute.

The cookies are prepared by enrobing 6.5g portions of the filler dough in 6.5g portions of the casing dough and baking the enrobed dough pieces at 400°F (204°C) for 7.5 minutes.

Example 5

This Example illustrates how a multi-textured butterscotch chocolate chip cookie of the invention could be prepared in which the casing dough would comprise a maltodextrin, lactose, and dextrose.

The ingredients and their relative amounts which may be used to prepare the casing dough are:

| Ingredients | Parts by Weight |
|---|---|
| Lactose | 5.0 |
| Dextrose, Anhydrous | 20.0 |
| Maltodextrin (Maltrin M100) | 20.0 |
| Vegetable Shortening | 50.0 |
| Rapeseed Spray Oil | 10.0 |
| Minor flavoring and texturizing ingredients (salt, whole egg powder, caramel color, and vanilla flavor) | 3.3 |
| Corn syrup (about 64DE, 43° Baume, 79% solids by weight) | 3.5 |
| Molasses | 2.5 |
| Honey | 3.0 |
| Water | 22.0 |
| Bleached Flour | 100.0 |
| Sodium Bicarbonate | 2.0 |
| Vital Wheat Gluten | 1.5 |
| Sodium Acid Pyrophosphate | 0.8 |
| Chocolate Chips (10,000 CPP) | 25.0 |
| Sucrose | 65.0 |
| | 333.6 |

Thirty-five parts of the sugar, the lactose, dextrose, maltodextrin, vegetable shortening, spray oil, salt, whole egg powder, caramel color, and vanilla flavor are added to a mixing bowl and creamed together for 3 minutes at low speed. The corn syrup, molasses, honey, and water are added and the resultant mixture mixed at low speed for 2 minutes. The low speed mixing is continued for a further 2 minutes after the addition of the flour, sodium bicarbonate, wheat gluten, and sodium acid pyrophosphate. Finally, the remaining sugar and chocolate chips are added and the low speed mixing continued for another minute.

The ingredients and their relative amounts which may be used to prepare a filler dough are:

| Ingredients | Parts by Weight |
|---|---|
| Sucrose | 31.0 |
| Vegetable Shortening | 20.0 |
| Margarine | 20.0 |
| Modified Corn Starch | 8.5 |
| Minor texturizing and flavoring ingredients (salt, skim milk powder, whole egg powder, and vanilla, butterscotch, and cocoa flavors) | 7.4 |
| High Fructose Corn Syrup (about 73% by weight solids, 42% fructose, 50% dextrose) | 85.0 |
| Honey | 3.0 |
| Water | 2.0 |
| Bleached Flour | 100.0 |
| Sodium Acid Pyrophosphate | 0.3 |
| Ammonium Bicarbonate | 0.3 |
| Sodium Bicarbonate | 0.8 |
| Chocolate Chips (1,200 CPP) | 40.0 |
| Butterscotch Chips (1,200 CPP) | 44.0 |
| | 362.3 |

The filler dough is prepared by creaming together the sugar, vegetable shortening, margarine, salt, starch, skim milk powder, whole egg powder, vanilla and butterscotch flavorings, and cocoa in a mixing bowl at low speed for 3 minutes. Next, the high fructose corn syrup, honey, and water are added, and the resultant mixture mixed together at low speed for 2 minutes. Then, the flour, sodium acid pyrophosphate, ammonium bicarbonate, and sodium bicarbonate are added and the low speed mixing continued for another 2 minutes. Finally, the chocolate and butterscotch chips are added and the low speed mixing continued for a further minute.

The cookies are prepared by enrobing 6.5g portions of the filler dough in 6.5g portions of the casing dough and baking the enrobed dough pieces at 400°F (204°C) for about 7.5 minutes.

Example 6

This Example illustrates how a multi-textured mint chocolate chip cookie of the invention could be prepared in which the casing dough would comprise a maltodextrin, lactose, and dextrose.

The ingredients and their relative amounts which may be used to prepare the casing dough are:

| Ingredients | Parts by Weight |
|---|---|
| Lactose | 5.0 |
| Dextrose, Anhydrous | 20.0 |
| Maltodextrin (Maltrin M100) | 20.0 |
| Vegetable Shortening | 50.0 |
| Rapeseed Spray Oil | 10.0 |
| Minor Flavor and Texturizing Ingredients (salt, whole egg powder, caramel color, vanilla) | 3.3 |
| Vital Wheat Gluten | 1.5 |
| Molasses | 2.5 |
| Honey | 3.0 |
| Corn Syrup (about 64 DE, 43° Baume, 79% solids by weight) | 3.5 |
| Water | 22.0 |
| Bleached Flour | 100.0 |
| Sodium Bicarbonate | 2.0 |
| Sodium Acid Pyrophosphate | 0.8 |
| Chocolate Chips (10,000 CPP) | 25.0 |
| Sucrose | 65.0 |
| | 333.6 |

Thirty-five parts of the sugar, the lactose, dextrose, maltodextrin, vegetable shortening, spray oil, salt, whole egg powder, caramel color, vanilla flavor and wheat gluten are creamed in a mixing bowl at low speed for 3 minutes. Then, the molasses, honey, glucose, and water are added, and the resulting mixture mixed at low speed for 2 minutes. Next the flour, sodium bicarbonate, and sodium acid pyrophosphate are added and the low speed mixing continued for another 2 minutes. Finally the remaining sugar and chocolate chips are added, and the low speed mixing continued for a further minute.

The ingredients and their relative amounts which may be used to prepare the dough for the mint chocolate cookies are:

| Ingredients | Parts by Weight |
|---|---|
| Vegetable Shortening | 20.0 |
| Margarine | 20.0 |
| Sucrose | 31.0 |
| Minor flavoring and texturizing ingredients (salt, cocoa, skim milk powder, whole egg powder, and vanilla) | 7.2 |
| Modified corn starch | 8.5 |
| High Fructose Corn Syrup (about 73% by weight solids; 42% fructose, 50% dextrose) | 85.0 |
| Honey | 3.0 |
| Water | 2.0 |
| Bleached Flour | 100.0 |
| Sodium Bicarbonate | 2.0 |
| Sodium Acid Pyrophosphate | 0.8 |
| Ammonium Bicarbonate | 0.3 |
| Mint Chocolate Chips (1,200 CPP) | 81.0 |
| | 360.8 |

The vegetable shortening, margarine, sugar, salt, cocoa, starch, skim milk powder, whole egg powder, and vanilla flavor are added to a mixing bowl and creamed together for 3 minutes. Next, the high fructose corn syrup, honey, and water are added and the resultant mixture mixed at low speed for 2 minutes. Then the flour, sodium bicarbonate, sodium acid pyrophosphate, and ammonium bicarbonate are added and the low speed mixing continued for another 3 minutes. Finally, the mint chocolate chips are added and the low speed mixing continued for another minute.

The cookies are prepared by enrobing 6.5g portions of the filler dough in 6.5g portions of the casing dough and baking the enrobed dough pieces at 400°F (204°C) for 7.5 minutes.

**Claims**

1. A process for preparing a cookie, which process comprises preparing at least one dough by mixing flour, a sweetening agent, and fat or shortening to form the dough, and baking the dough to form the cookie, wherein the sweetening agent comprises an edible glass-forming polysaccharide and a humectant sugar, said humectant sugar comprising lactose and/or dextrose.

2. A process according to claim 1 wherein the glass-forming polysaccharide comprises a maltodextrin.

3. A process according to claim 2 wherein the maltodextrin has a dextrose equivalent of from about 5 to about 15.

4. A process according to claim 3 wherein the maltodextrin has a dextrose equivalent of about 10 to about 15.

5. A process according to claim 2 wherein at least about 85 percent by weight of the carbohydrate in the maltodextrin is in the form of tetra-or higher polysaccharides.

6. A process according to claim 2 wherein the amount of the maltodextrin added to the dough is from about 4 to about 15 percent by weight of the dough.

7. A process according to claim 6 wherein the amount of the maltodextrin added to the dough is from about 5 to about 10 percent by weight of the dough.

8. A process according to claim 1 wherein the humectant sugar further comprises fructose.

9. A process according to claim 8 wherein the fructose is added to the dough in the form of a high fructose corn syrup and/or molasses.

10. A process according to claim 9 wherein the high fructose corn syrup contains at least about 80 percent by weight fructose on a solids basis.

11. A process according to claim 1 wherein the humectant sugar comprises a mixture of lactose and dextrose.

12. A process according to claim 1 wherein the amount of the humectant sugar added to the dough is from about 4 to about 12 percent by weight of the dough.

13. A process according to claim 12 wherein the amount of the humectant sugar added to the dough is from about 6 to about 10 percent by weight of the dough.

14. A process according to claim 1 wherein the weight ratio of glass-forming polysaccharide to humectant sugar in the dough is in the range of from about 1.5:1 to about 0.4:1.

15. A process for preparing a multi-textured cookie comprising preparing a first cookie dough by mixing flour, fat or shortening and a humectant, preparing a second cookie dough by mixing flour, an edible glass-forming polysaccharide, fat or shortening, and a humectant sugar comprising lactose and/or dextrose, enrobing a portion of the first cookie dough within a portion of the second cookie dough to form a composite dough piece, and baking the composite dough piece to form a multi-textured cookie having a center with a soft texture and a firm outer layer.

16. A process according to claim 15 wherein the glass-forming polysaccharide is added to the second dough only.

17. A process according to claim 16 wherein the humectant used in the first dough comprises a humectant sugar.

18. A process according to claim 15 wherein, in said second cookie dough, the glass-forming polysaccharide comprises a maltodextrin having a dextrose equivalent of from about 5 to about 15, the maltodextrin being added to the second dough in an amount of from about 4 to about 15 percent by weight of the second dough, and the total amount of lactose and dextrose is from about 4 to about 12 percent by weight of the second dough.

19. A process for preparing a cookie, which process comprises preparing at least one dough by mixing flour, a sweetening agent and fat or shortening and baking the dough to form a cookie, wherein the sweetening agent comprises sucrose, a maltodextrin having a dextrose equivalent of from about 5 to about 15, lactose and dextrose, the maltodextrin being added to the dough in an amount of from about 4 to about 15 percent by weight of the dough and the total amount of lactose and dextrose added to the dough is from about 4 to about 12 percent by weight of the dough.

20. A cookie produced by the process of claim 1.

21. A cookie produced by the process of claim 15.

22. A cookie dough composition for producing cookies having a firm texture, the dough composition comprising flour, fat or shortening, an edible glass-forming polysaccharide and a humectant sugar comprising lactose and/or dextrose.

23. A composition according to claim 22 wherein the glass-forming polysaccharide comprises a maltodextrin.

24. A composition according to claim 23 wherein the maltodextrin has a dextrose equivalent of from about 5 to about 15.

25. A composition according to claim 24 wherein the maltodextrin has a dextrose equivalent of about 10 to about 15.

26. A composition according to claim 23 wherein at least about 85 percent by weight of the carbohydrate in the maltodextrin is in the form of tetra-or higher polysaccharides.

27. A composition according to claim 23 wherein the maltodextrin comprises from about 4 to about 15 percent by weight of the dough composition.

28. A composition according to claim 27 wherein the maltodextrin comprises from about 5 to about 10 percent by weight of the dough composition.

29. A composition according to claim 22 wherein the humectant sugar further comprises fructose.

30. A composition according to claim 29 wherein the fructose is present in the dough as a high fructose corn syrup and/or molasses.

31. A process according to claim 22 wherein the humectant sugar comprises a mixture of lactose and dextrose.

32. A composition according to claim 22 wherein the humectant sugar comprises from about 4 to about 12 percent by weight of the dough composition.

33. A composition according to claim 32 wherein the humectant sugar comprises from about 6 to about 10 percent by weight of the dough composition.

34. A composition according to claim 22 wherein the weight ratio of glass-forming polysaccharide to humectant sugar is in the range of from about 1.5:1 to about 0.4:1.

35. A cookie dough composition for producing a multi-textured cookie, the cookie dough composition comprising a center formed of a first cookie dough comprising flour, a humectant and fat or shortening and bakeable to a soft texture, and an outer layer formed of a second cookie dough comprising flour, fat or shortening, a glass-forming polysaccharide and a humectant sugar comprising lactose and/or dextrose, the second cookie dough being bakeable to a firm texture.

36. A composition according to claim 35 wherein the center is essentially free of edible glass-forming polysaccharides.

37. A composition according to claim 36 wherein the humectant used in the center comprises a humectant sugar.

38. A composition according to claim 35 wherein in said second cookie dough, the glass-forming polysaccharide comprises a maltodextrin having a dextrose equivalent of from about 5 to about 15, the maltodextrin being present in the second dough in an amount of from about 4 to about 15 percent by weight of the second dough, and the total amount of lactose and dextrose is from about 4 to about 12 percent by weight of the second dough.

39. A cookie prepared by baking a dough composition according to claim 22.

40. A cookie prepared by baking a dough composition according to claim 35.

41. A process for preparing a cookie, which process comprises preparing at least one dough by mixing flour, a sweetening agent, and fat or shortening to form the dough, and baking the dough to form the cookie, wherein the sweetening agent comprises an edible glass-forming polysaccharide and a humectant sugar.

42. A process according to claim 41 wherein the glass-forming polysaccharide comprises a maltodextrin.

43. A process according to claim 42 wherein the amount of the maltodextrin added to the dough is from about 10 to about 20 percent by weight of the dough.

44. A process according to claim 41 wherein the humectant sugar comprises fructose.

45. A process for preparing a multi-textured cookie comprising preparing a first cookie dough by mixing flour, fat or shortening and a humectant, preparing a second cookie dough by mixing flour, an edible glass-forming polysaccharide, fat or shortening, and a humectant sugar, enrobing a portion of the first cookie dough within a portion of the second cookie dough to form a composite dough piece, and baking the composite dough piece to form a multi-textured cookie having a center with a soft texture and a firm outer layer.

46. A process according to claim 45 wherein the glass-forming polysaccharide is added to the second dough only.

47. A process according to claim 45 wherein, in said second cookie dough, the glass-forming polysaccharide comprises a maltodextrin having a dextrose equivalent of from about 5 to about 15, the maltodextrin being added to the second dough in an amount of from about 10 to about 20 percent by weight of the second dough, and the total amount of humectant sugar is from about 4 to about 12 percent by weight of the second dough.

48. A process for preparing a cookie, which process comprises preparing at least one dough by mixing flour, a sweetening agent and fat or shortening and baking the dough to form a cookie, wherein the sweetening agent comprises sucrose, a maltodextrin having a dextrose equivalent of from about 5 to about 15, and a humectant sugar, the maltodextrin being added to the dough in an amount of from about 10 to about 20 percent by weight of the dough and the total amount of humectant sugar added to the dough is from about 4 to about 12 percent by weight of the dough.

49. A cookie produced by the process of claim 45.

50. A cookie dough composition for producing cookies having a firm texture, the dough composition comprising flour, fat or shortening, an edible glass-forming polysaccharide and a humectant sugar.

51. A composition according to claim 50 wherein the glass-forming polysaccharide comprises a maltodextrin.

52. A composition according to claim 51 wherein the maltodextrin comprises from about 10 to about 20 percent by weight of the dough composition.

53. A composition according to claim 50 wherein the humectant sugar comprises fructose.

54. A composition according to claim 53 wherein the fructose is present in the dough as a high fructose corn syrup and/or molasses.

55. A composition according to claim 50 wherein the humectant sugar comprises from about 4 to about 12 percent by weight of the dough composition.

56. A composition according to claim 50 wherein the weight ratio of glass-forming polysaccharide to humectant sugar is in the range of from about 3:1 to about 1:1.

57. A cookie dough composition for producing a multi-textured cookie, the cookie dough composition comprising a center formed of a first cookie dough comprising flour, a humectant and fat or shortening and bakeable to a soft texture, and an outer layer formed of a second cookie dough comprising flour, fat or shortening, a glass-forming polysaccharide and a humectant sugar, the second cookie dough being bakeable to a firm texture.

58. A composition according to claim 57 wherein the center is essentially free of edible glass-forming polysaccarides.

59. A composition according to claim 57 wherein in said second cookie dough, the glass-forming polysaccharide comprises a maltodextrin having a dextrose equivalent of from about 5 to about 15, the maltodextrin being present in the second dough in an amount of from about 10 to about 20 percent by weight of the second dough, and the total amount of humectant sugar is from about 4 to about 12 percent by weight of the second dough.

60. A cookie prepared by baking a dough composition according to claim 57.